# DEMANDE DE BREVET EUROPEEN

(11) **EP 2 144 322 A2**
(43) Date de publication de la demande: **13.01.2010**
(21) Numéro de dépôt: 09163823.9
(22) Date de dépôt: 25.06.2009
(51) Int. Cl.: H01M 10/44, H01M 10/50, H01M 2/10, H01M 10/42

(54) **Pack d'accumulateurs rechargeables avec circuits electroniques de pilotage**

(30) Priorité: 09.07.2008 FR 0854675
(71) Demandeur: Peugeot Citroën Automobiles Société Anonyme, 78140 Velizy Villacoublay (FR)
(72) Inventeur: Rolland, Guillaume, 78380, BOUGIVAL (FR)
(74) Mandataire: Ménès, Catherine

(57) **Abrégé**

Pack d'accumulateurs rechargeables comportant une pluralité de stockeurs électriques montés en série, une pluralité de circuits électroniques pour le pilotage des stockeurs du pack, connectés aux bornes de ladite pluralité de stockeurs, les stockeurs présentant leurs pôles sur des faces opposées et étant disposés les uns derrière les autres pour former un train oblong, caractérisé en ce que les circuits électroniques sont logés dans des compartiments longeant les stockeurs ; le ou les circuits d'un compartiment sont reliés électriquement à un pôle d'un stockeur par un connecteur et les compartiments sont assemblés bout à bout, d'une part pour relier électriquement les circuits électroniques et d'autre part pour former un boitier essentiellement parallèle au train.

## Description

### Domaine technique

La présente invention concerne les circuits électriques, notamment les circuits de véhicules automobiles, comportant au moins un agencement d'une pluralité des éléments de stockage électrique, notamment des éléments de stockage d'énergie du type batteries et/ou du type supercondensateurs - ces derniers étant également connus sous le terme de super-ou ultra-capacités ou encore UCAP.

L'invention vise tout particulièrement les agencements dédiés aux applications nécessitant de forte puissance. Ces applications sont par exemple dans le domaine des transports (véhicules hybrides, tramways, bus, etc.), de l'alimentation électrique (éoliennes) ou encore plus généralement dans des domaines où des pointes de consommation électriques peuvent nécessiter de supplémenter l'énergie fournie par une batterie ou un réseau. La présente invention concerne plus particulièrement une solution organique de maîtrise de la charge et la décharge de tels éléments.

### Etat de la technique antérieure

Les deux technologies de stockage par batterie ou par Ucap se caractérisent par des cellules unitaires de tension faibles, typiquement entre 2 et 4V. Ce faible niveau de tension impose, dans beaucoup d'applications, d'associer les cellules en série et/ou en parallèle. La constitution de modules, impose d'autre part l'emploi de moyens électroniques pour suivre le comportement des grandeurs physiques indispensables du type courant, tension, température ainsi que d'assurer la gestion du niveau de charge et de l'équilibrage entre les différentes cellules.

En règle générale, ces moyens électroniques se présentent sous la forme de cartes électroniques intercalées entre deux cellules unitaires, et raccordées sur les bornes électriques. Une caractéristique essentielle de ces cartes est de permettre d'équilibrer les niveaux de charge des différentes cellules et d'éviter par ailleurs, que la tension unitaire de chaque cellule ne dépasse pas sa tension nominale admissible.

Il importe de noter que si la tension unitaire de chaque cellule est faible, il n'en est pas de même des courants qui traversent des modules associant une série de cellules unitaires. Par ailleurs, ces modules peuvent être placés dans des environnements contraignants, avec des expositions aux poussières et à l'humidité (voir directement à l'eau), comme c'est notamment le cas pour les applications automobiles. De plus, les forts ampérages peuvent constituer un danger, surtout à l'égard d'utilisateurs non spécialistes. Ces différentes raisons font qu'il est normalement prévu une encapsulation de l'ensemble pour protéger tout équipement électrique.

Par ailleurs, il est connu de la demande de brevet français 0758973, déposée le 13 novembre 2007, un système de commutation apte à permettre de piloter une tension par la mise en série ou le shunt d'un nombre de cellules unitaires variable, de manière à piloter une tension de charge ou de décharge, proche d'une tension de consigne. Ce système de pilotage permet d'éviter le recours systématique à des convertisseurs de tension du type DC/DC, convertisseurs qui d'une part renchérissent fortement le coût des systèmes et qui d'autre part, posent des problèmes de localisation dans des environnements déjà très encombrés comme l'espace sous capot d'un véhicule automobile.

Toutefois, si le système de commutation est intégré aux moyens électroniques, ceux-ci doivent alors être capables de supporter des courants non plus de l'ordre de quelques ampères, mais de plusieurs centaines d'ampères. A l'évidence, ceci renforce à priori la nécessité de protéger le système par encapsulation. Pour autant, plus le courant est élevé, plus l'échauffement du système est grand, et plus l'encapsulation va contribuer à celui-ci en confinant le système et en empêchant son refroidissement.

Dans la demande de brevet internationale WO2008/034936, il a été proposé un équipement intégré pour véhicules automobiles comprenant un pack de supercondensateurs, équipé de moyens d'équilibrage de tension et de circuits électroniques, comprenant notamment un convertisseur continu/continu ou alternatif/continu. Cet équipement comporte un boitier avec au moins deux compartiments, un premier compartiment étant dédier au pack de supercondensateurs et le second aux moyens d'équilibrage de tension et aux circuits électroniques. Dans une variante, le boitier peut être refroidi. Cet équipement permet d'intégrer dans un même ensemble différents éléments d'une manière relativement compacte, en limitant les longueurs de câbles et donc les chutes de tension associées. Pour autant, il manque largement de modularité. De plus, l'agencement et l'encapsulation des supercondensateurs ne facilitent pas leur refroidissement.

### Brève description de l'invention

La présente invention propose une architecture organique simplifiée permettant également d'améliorer le refroidissement des moyens électroniques, tout en introduisant la modularité.

Dans une variante, la présente invention propose également une solution permettant de refroidir les modules électroniques et les éléments de stockage, autorisant en outre la formation de trains comportant plusieurs d'éléments.

Ce but est atteint selon l'invention par un pack d'accumulateurs rechargeables comportant une pluralité de stockeurs électriques montés en série, une pluralité de circuits électroniques associés aux stockeurs du pack, connectés aux bornes de ladite pluralité de stockeurs, les stockeurs présentant leurs pôles sur des faces opposées et étant disposés les uns derrière les autres pour former un train oblong. Selon l'invention, ce pack est remarquable en ce que les circuits électroniques sont logés dans des compartiments longeant les stockeurs ; le ou les circuits d'un compartiment sont reliés électriquement à un pôle d'un stockeur par soudage ou par un connecteur et les compartiments sont assemblés bout à bout, d'une part pour relier électriquement les circuits électroniques et d'autre part pour former un boitier essentiellement parallèle au train.

L'invention est tout particulièrement avantageuse si elle est mise en oeuvre pour le montage modulaire d'une cellule conforme à l'enseignement de la demande de brevet français 0758973. Le pack est alors essentiellement formé par un train oblong bordé longitudinalement par le boitier qui forme une barre parallèle au train, les différents éléments sont essentiellement en contact les uns des autres par leurs faces d'extrémité et le refroidissement peut être simplement effectué en créant par exemple un courant d'air parallèle ou perpendiculaire au train (et donc à la barre). La forme du radiateur de refroidissement de l'électronique sera à adapter en fonction de la direction du flux de refroidissement.

De plus, le système est parfaitement modulaire, les connecteurs permettant notamment d'assurer une bonne isolation électrique, et de protéger tous les composants électriques du système même dans un environnement poussiéreux ou humide.

L'invention peut avantageusement répondre à une ou plusieurs des caractéristiques suivantes :
- Au moins deux des connecteurs du pack forment des cales pour maintenir le boitier écarté du train.
- Le train et le boitier sont séparés au moins par une couche d'un isolant thermique.
- Les connecteurs sont intégrés aux compartiments et forment des fiches adaptées pour être enfichées sur des prises latérales reliées aux bornes des stockeurs, les fiches étant par exemple intégrées aux stockeurs ou intégrées à des pièces de jonction, une pièce de jonction conductrice ou non, en fonction du type d'électronique, pouvant être intercalée entre deux stockeurs successifs du train.
- Le pack comporte des moyens de refroidissement du boitier, ces moyens de refroidissement pouvant comporter notamment des moyens pour assurer une circulation forcée d'un fluide de refroidissement à travers la succession de compartiments formant le boitier et/ou un dissipateur thermique.
- Les circuits électroniques comportent des moyens de commutation permettant de shunter un ou plusieurs stockeurs du train. Cette variante de l'invention est tout particulièrement utile pour la mise en oeuvre du procédé détaillé dans la demande de brevet français 0758973 précitée
- Les circuits électroniques peuvent également être constitué ou comporter des moyens d'équilibrage de tension, comprenant par exemple des moyens de limitation de tension
- Les stockeurs comportent des batteries et/ou des supercondensateurs.

### Brève description des figures

D'autres avantages et particularités de l'invention ressortent de la description de modes de réalisation faite ci-après en référence aux dessins annexés dans lesquels :

La figure 1 est un schéma montrant un ensemble de supercondensateurs selon l'art antérieur.

La figure 2 illustre une première solution avec une barre de cellules standard dont l'électronique est connectée sur des rondelles de jonctions adaptées

La figure 3A illustre une cellule unitaire spécialement conçue pour avoir une connexion électrique directe avec l'intérieur de la cellule. La figure représente la cellule et son système électronique monté. La figure 3B illustre une barre composée de cellules dédiées du type représenté à la figure 3A.

Les figures 4A et 4C illustrent une solution d'électronique externe d'une cellule unitaire, pour une application de forte puissance, pouvant être un système commuté et en 4D la barre formée par deux cellules du même type.

La figure 5 illustre une solution mixte d'un groupe de deux cellules pour une application de forte puissance du type commutation avec un point de connexion électrique entre les cellules de manière à permettre l'équilibrage de ces mêmes cellules.

### Exposé détaillé de modes de réalisation de l'invention

La description qui suit est fait en supposant que l'élément de stockage est du type supercondensateur, pour autant l'invention peut également s'appliquer à d'autres types d'éléments de stockage, comme par exemple des batteries.

Rappelons que la technologie de stockage d'énergie par des supercondensateurs repose sur le principe de fonctionnement des condensateurs classiques, et offre ainsi des performances en densités d'énergie relativement faibles mais avec une capacité au stockage / déstockage en fortes puissances. Ces supercondensateurs s'apparent ainsi fonctionnellement aux batteries électrochimiques qui équipent notamment les véhicules automobiles. Les supercondensateurs supportent un nombre de cycles de charge et de décharge très supérieur à celui des batteries conventionnelles, les spécialisant dans les applications requérant des sources de puissances élevées sur des temps courts. La spécificité d'une supercapacité est d'être un système d'accumulation de tension capacitif avec, comme pour tout condensateur, l'énergie E est reliée à la tension U par l'équation E = CU²/2.

Les supercondensateurs actuellement commercialisés sont typiquement constitués d'un élément cylindrique formé par l'enroulement sur lui-même d'un feuillet composé d'une feuille d'aluminium formant une anode, d'un séparateur en papier et d'une autre feuille d'aluminium formant une cathode. Les feuilles formant l'anode et la cathode subissant typiquement un traitement de surface pour favoriser la formation d'une fine couche d'alumine et surtout l'adhésion d'une couche active, comme par exemple une mousse de carbone. L'élément ainsi formé est ensuite imprégné d'un électrolyte et l'ensemble est enfermé dans un boitier étanche afin d'éviter l'évaporation de l'électrolyte en prévoyant, bien sûr, des moyens pour connecter l'anode et la cathode à un circuit électrique.

Du fait de cette technologie de construction par enroulement de films minces, la tension unitaire maximum d'une UCAP est aujourd'hui limitée à environ 2,7 Volts. Cette faible tension impose, dans beaucoup d'applications, d'associer les cellules en série et ou en parallèle, sous forme de modules. La constitution de modules, impose d'autre part l'emploi de moyens électroniques pour réaliser un équilibrage électrique.

La présence des Ucap et de l'électronique d'équilibrage conduit à privilégier des moyens de confinement de manière à les protéger des projections d'eau et de l'humidité, en particulier lorsqu'il s'agit d'applications du type automobile. Le confinement est typiquement enceinte isolante en plastique ou en métal.

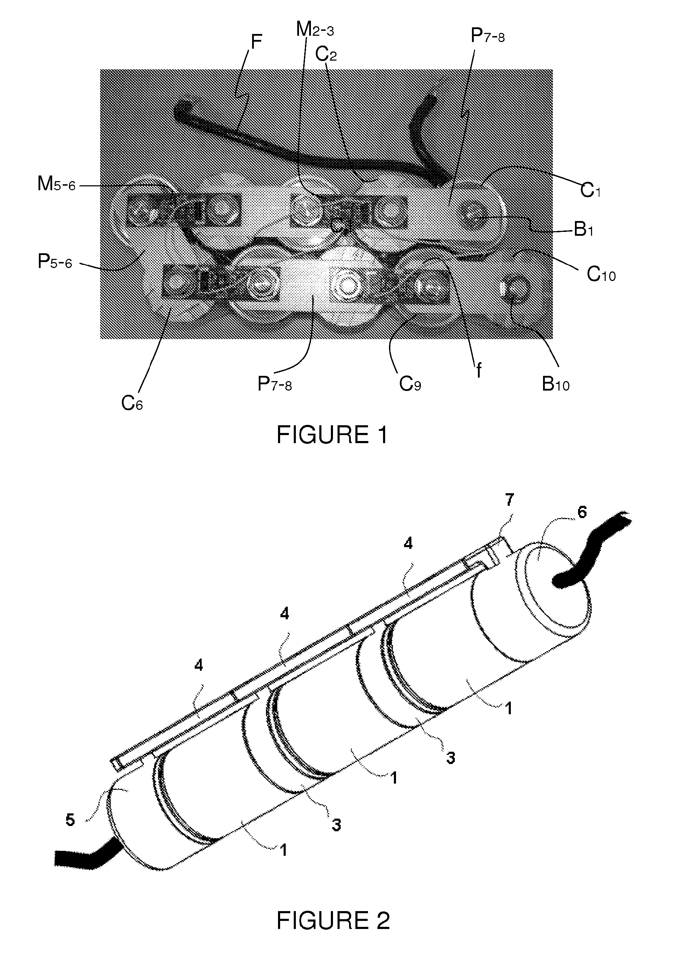

La figure 1 est un schéma d'un ensemble de supercondensateurs selon l'art antérieur, tel que proposé par exemple en appoint d'une batterie conventionnelle, notamment pour l'alimentation électrique d'une machine électrique apte à entrainer le vilebrequin du moteur thermique pour des périodes plus ou moins prolongées et plus ou moins fréquentes. Un tel ensemble peut ainsi équiper un véhicule dit « full hybride » ou un véhicule équipé par exemple d'une fonction dite « stop-and-start » qui commande l'arrêt du moteur thermique dès que le véhicule est à l'arrêt, ou proche d'un arrêt, par exemple pour respecter un feu de circulation ou lors d'une congestion de trafic, et qui provoque le redémarrage du moteur thermique dès que le conducteur manifeste sa volonté de redémarrage, par exemple par un appui sur la pédale d'accélération.

L'ensemble illustré figure 1, vu ici de dessus, comporte 6 supercondensateurs C₁, C₂, ..., C₆, montés en série au moyen de 9 pattes de raccordement. Sur le schéma, seules les pattes P₁₋₂, P₃₋₄, ... P₅₋₆ montées sur la face de dessus et reliant les supercondensateurs C_{1 -} C_{2 ;} C₃₋ C₄ sont visibles mais il importe de noter que d'autres pattes relient les supercondensateurs C₂ et C₃, disposées elles, en arrière.

Ces pattes sont réalisées dans un corps électriquement conducteur et sont maintenues en place par des boulons B1, B2...pour assurer la continuité électrique. Une telle connectique est imposée par les intensités élevées du courant électrique mises en jeu. Les supercondensateurs terminaux sont par ailleurs munis de deux câbles de puissance pour le raccordement au réseau.

Pour équilibrer les charges des supercondensateurs, ce type d'ensemble comporte de plus une série de modules électroniques, montés comme les pattes en série, en alternance avec celles-ci. A la patte P₁-₂ correspond donc un module M₁-₂ non visible, alors que le module reliant les supercondensateurs C₂ et C₃ est lui visible. Chaque module est formé d'un circuit électronique dont les éléments sont par exemple collés sur une plaque en céramique ou en matière plastique non conductrice. Ces modules permettent de mesure les tensions des supercondensateurs, et de commander l'équilibrage de celles-ci si des écarts trop importants sont constatés. Des fils électriques f ici de petits diamètres relient les modules électroniques les uns aux autres.

Un tel ensemble pose de multiples problèmes de mise en oeuvre. Ainsi, la multiplicité des éléments conducteurs électriques présentés « à l'air libre » implique qu'en pratique, l'ensemble soit monté dans une enceinte fermée pour éviter les courts-circuits et/ou le contact avec par exemple un air extérieur humide (ou même tout simplement de l'eau si l'ensemble équipe un véhicule qui peut devoir passer un guet ou tout simplement être nettoyé au moyen d'un jet d'eau haute pression).

De plus, on comprend aisément qu'un tel ensemble est très difficile à réguler thermiquement, notamment compte tenu de la présence de tous les éléments de connectique.

La figure 1 illustre par ailleurs un autre problème inhérent à une telle architecture, à savoir la complexité relative du montage qui doit normalement être effectué par un praticien électricien qualifié, et non par un simple mécanicien. Cette complexité entraine un coût pénalisant pour la généralisation de ce type de technologie.

La présente invention propose une solution qui simplifie le montage de la partie « électronique » de ce montage, et permet d'assurer un refroidissement spécifique de cette partie. La nature, et la configuration précise de l'élément de stockage n'est pas discutée dans la présence demande. Si du fait de leur technologie de fabrication, les supercondensateurs ou les batteries se présentent typiquement sous la forme d'un cylindre droit. Mais de façon plus générale, l'invention peut être utilisée avec tout élément de stockage dont l'enveloppe correspond à une surface cylindrique (au sens mathématique du terme, ce qui inclut en particulier les formes prismatiques dont les cubes et les parallélépipèdes rectangles).

Par contre, l'invention suppose que les pôles électriques soient situés (ou rendus accessibles) sur des faces opposées de l'élément de stockage, de sorte qu'un accumulateur peut être formé en montant les éléments en série, pour former des trains d'éléments.

La figure 2 décrit un module constitué de 3 cellules 1, séparées par des rondelles 3 permettant une connexion électrique des différentes cellules, ainsi que la connexion électrique pour un système électronique, pouvant être, par exemple le système d'équilibrage. L'intérêt de la création de ces rondelles est de pouvoir utiliser des cellules standards.

Les liaisons entre les cellules et les rondelles de connexion peuvent être du type vissées ou le clippées. La direction du clip pouvant être axial ou radial. Le système électronique 4 étant intégré ou ensuite clippé sur la rondelle, par l'intermédiaire d'un orifice de connexion électrique de type connu, comme une prise jack ou un clip électrique spécifique 7. Les barres électroniques 4 sont ensuite emmanchées l'une dans l'autre. La connexion aux deux extrémités est ici réalisée au moyen de flasques 6 et 7, munis de fils électriques de connexion. Dans une variante ici non représentée, les ensembles 4 à 7 peuvent également être eux d'un seul tenant, les cellules électriques étant alors les éléments radiaux rajoutés.

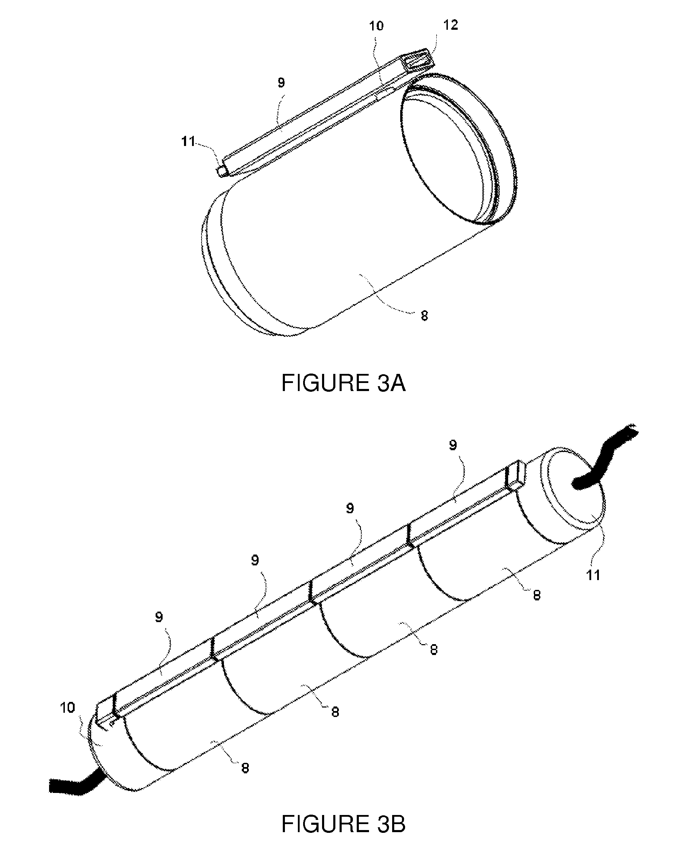

Ce type de solution est rendu étanche par une conception dédiée des rondelles, l'encapsulation de l'électronique et une connexion électrique étanche de l'électronique sur les rondelles de jonctions. Les figure 3A et 3B illustrent comment poursuivre ce concept d'intégration et si nécessaire d'étanchéité.

La figure 3A représente une cellule unitaire 8 ayant les deux pôles électriques aux deux extrémités, mais dédiée à recevoir une électronique externe. La cellule 8 est donc **caractérisé en ce qu**'une connexion électrique est réalisée au travers de son enveloppe extérieure de manière à pouvoir y clipper une barrette électronique externe 9. Cette barrette électronique est donc munie d'une connexion 10 pouvant être fixe ou amovible et de deux fiches de connexion 11 et 12 permettant de connecter l'électronique de puissance et différentes connexion pour des fils de commande ou d'équilibrage. Cette solution est donc similaire à la solution décrite en figure 2, mais avec un nombre de composants plus réduit.

La structure telle que présenté en figure 3B, mais également en figure 2, permet de réaliser des modules, dont les cellules et/ou l'électronique sont facilement échangeables facilitant l'assemblage en usine et simplifiant les opérations de maintenance. Ce packaging simple peut également éviter l'encapsulation des cellules et de l'électronique permettant un meilleur refroidissement de la cellule et de son électronique associée. Cet avantage est décisif quand l'on sait que la durée de vie des cellules est très fortement impactée par la température de fonctionnement. Pour des cellules du type Ucap par exemple, une augmentation de la température de 10°C peut entraîner une réduction de durée de vie d'un facteur 10.

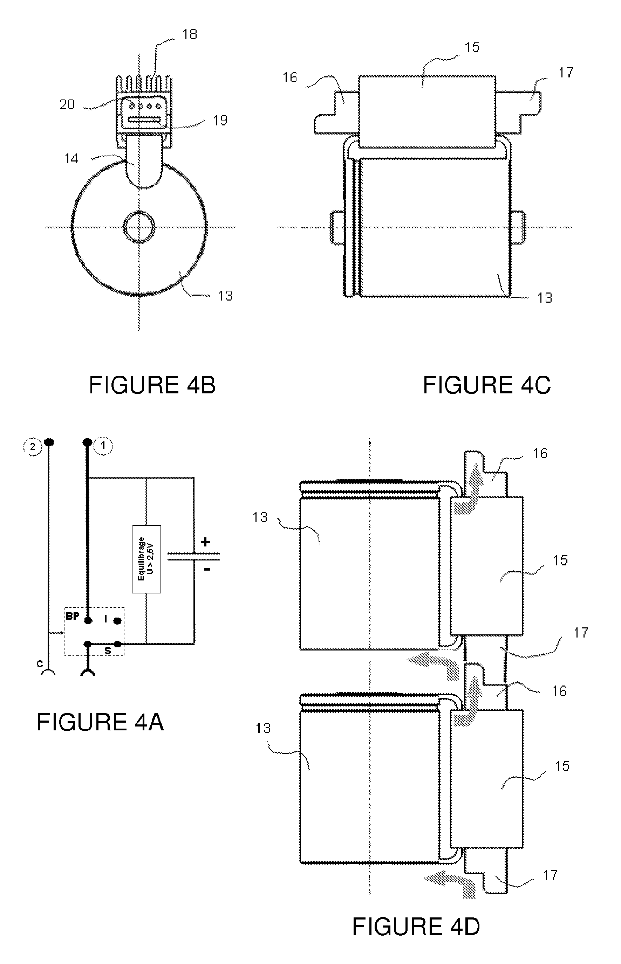

La figure 4A rappel le schéma de principe de fonctionnement des cellules commutées tel que décrit dans le brevet français 0758973, déposée le 13 novembre 2007.

La cellule, ici simplement schématisée de façon conventionnelle par deux plaques opposées, à des pôles + et -, est montée entre deux bornes d'une ligne de puissance P, en interposant au moins un commutateur, ici, supposé à 3 positions : S, BP et I. La position I, optionnelle, correspond à une position dans laquelle la cellule est isolée temporairement ou définitivement. La borne BP est reliée à la ligne de puissance. Lorsque l'interrupteur est en position BP, le courant peut passer d'une borne à l'autre de la ligne de puissance mais l'unité de stockage électrique est déconnectée. La position S correspond à la mise en série de l'unité de stockage. Sur cette figure on a de plus prévu le cas où un système est prévu pour limiter la tension aux bornes de la cellule. En parallèle à la ligne de commande P est prévu une ligne de commande C, par laquelle transite les ordres de positionnement de l'interrupteur.

Sur ce type de cellule l'électronique comporte des interrupteurs de puissance constitués de relais ou de solution électronique de commutation de type MOS par exemple. La spécificité de ce type de montage est que, après assemblage en série des différentes cellules, le courant traversant l'électronique peut être très élevé. Pour une application de type automobile, il est typiquement de plusieurs centaines d'ampères. Ce type de solution impose un système de refroidissement de l'électronique compatible avec les puissances dissipées par le système de commutation.

Les figures 4B et 4C illustrent de face et de côté une solution organique correspondant au schéma de la figure 4A pour des cellules ayant les pôles sur les faces opposées. Le même type de solution peut s'envisager avec des cellules ayant les des pôles électriques sur la même face. Les pattes reliant le système électronique à la cellule commutée sont soudées de manière à limiter les résistances internes, mais le même type de solution peut être réalisé avec des pates amovibles clippées ou vissées.

Le boitier 15 renfermant l'électronique est ici muni d'un connecteur mâle et d'un connecteur femelle apte à permettre la liaison électrique par le canal de puissance 19. Cette liaison et son électronique associé permettent soit de mettre en série la cellule de stockage, soit de la shunter. Les 4 connexions 20 permettent la commande des interrupteurs de puissance et la remontée d'information. Il est bien évident que le nombre de connexions sera à adapter en fonction du type de commande et éventuellement du nombre de cellules. Le brevet français précité décrit différents types de commande. D'autres solutions remplissant la même fonction sont également envisageables, comme par exemple la dissociation de la partie puissance et de la commande. La partie commande pouvant être également externe et réalisée avec une nappe de fils électriques.

La figure 4D montre un ensemble de deux cellules, pouvant être des cellules commutées montées sous forme de barre. Il est à noter que pour ce type de montage, la rondelle de séparation, participant à la formation mécanique du train de cellule, quand elle existe, doit être isolante. Les flèches indiquées sur le dessin explicitent le passage du flux puissance. Fonctionnellement, les cellules de stockage électriques sont reliées à la colonne de puissance via des interrupteurs. Contrairement au système d'équilibrage, dans cette configuration, il ne doit pas y avoir de liaison électrique directe entre les cellules. La rondelle de plastique peut être une simple rondelle en plastique dur et deux filetages inversés de manière à pouvoir visser la rondelle sur les deux extrémités des cellules, sans avoir contact entre les cellules. Une autre solution est un séparateur en plastique clippé sur les cellules, sans filetage et extrémité des cellules. La forme de ces rondelles doit préférablement permettre le refroidissement des faces d'extrémité des cellules.

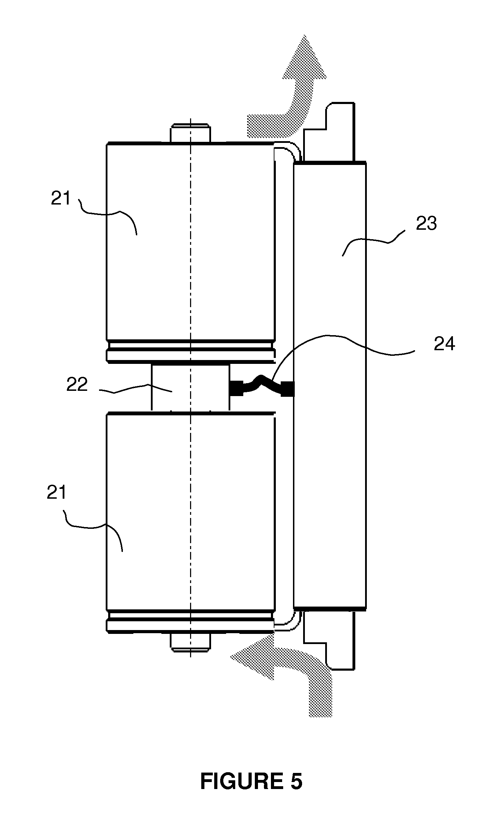

Suivant le brevet français 075897 une cellule commutée peut elle-même être composée de plusieurs stockeurs électriques. La figure 5 décrit une solution mixte, entre une solution de type 3 et une solution de type 4 avec deux cellules de stockage. En effet, pour des questions d'optimisation du coût et de limitation de la dissipation, il est avantageux de réduire au minimum les systèmes de commutation des cellules. Le plus souvent, il reste nécessaire de réaliser l'équilibrage des cellules. Les deux cellules 21 sont ici reliées par une rondelle conductrice 22. Cette rondelle est connectée électriquement au système électronique 23, par un fil 24 permettant de créer un point milieu électrique pour assurer l'équilibrage des cellules. Les flèches indiquées sur le dessin donnent le cheminement du flux de puissance.

La solution organique décrite apporte différents avantages comme la possibilité d'associer simplement les différentes cellules munies de leur électronique sous forme de barres. Ce type de montage offre une simplicité et une modularité bien plus importante que les solutions actuelles encapsulées. Elles permettent également d'envisager des solutions où les parties électriques sont encapsulées améliorant de manière très importante le refroidissement des cellules.

La modularité permet en outre d'adapter la forme des stockeurs aux différentes formes de la batterie.

Que le stockeur soit une batterie ou une Ucap, on distingue deux types de configurations :
- Des cellules comportant le pôle positif et le pôle négatif disposés sur deux faces différentes
- Des cellules pour laquelle les pôles positifs et négatifs sont sur la même face.
   Ces deux variantes entraînent des solutions organiques proches, sans être identiques.

Le dispositif L'élément de stockage est en général de forme cylindrique, et le plus souvent un cylindre droit dans le cas des supercondensateurs du fait de la technologie habituellement utilisée pour leurs productions. Pour autant, l'invention s'applique notamment à tout élément de stockage dont l'enveloppe correspond à une surface cylindrique (au sens mathématique du terme, ce qui inclut en particulier les formes prismatiques dont les cubes et les parallélépipèdes rectangles)

## Revendications

1. Pack d'accumulateurs rechargeables comportant une pluralité de stockeurs électriques montés en série, une pluralité de circuits électroniques associés aux stockeurs du pack, connectés aux bornes de ladite pluralité de stockeurs, les stockeurs présentant leurs pôles sur des faces opposées et étant disposés les uns derrière les autres pour former un train oblong, **caractérisé en ce que** les circuits électroniques sont logés dans des compartiments longeant les stockeurs ; le ou les circuits d'un compartiment sont reliés électriquement à un pôle d'un stockeur par un connecteur et les compartiments sont assemblés bout à bout, d'une part pour relier électriquement les circuits électroniques et d'autre part pour former un boitier essentiellement parallèle au train.

2. Pack selon la revendication 1, **caractérisé en ce qu'**au moins deux des connecteurs du pack forment des cales pour maintenir le boitier écarté du train.

3. Pack selon la revendication 1 ou la revendication 2, **caractérisé en ce que** le train et le boitier sont séparés au moins par une couche d'un isolant thermique.

4. Pack selon l'une quelconque des revendications précédentes, **caractérisé en ce que** le connecteur consiste en une liaison soudée.

5. Pack selon l'une quelconque des revendications 1 à 3, **caractérisé en ce que** lesdits connecteurs sont intégrés aux compartiments et forment des fiches adaptées pour être enfichées sur des prises latérales reliées aux bornes des stockeurs.

6. Pack selon la revendication 5, **caractérisé en ce que** lesdites fiches sont intégrées aux stockeurs.

7. Pack selon la revendication 5, **caractérisé en ce que** lesdites fiches sont intégrées à des pièces de jonction, une pièce de jonction étant intercalée entre deux stockeurs successifs du train.

8. Pack selon l'une quelconque des revendications précédentes, **caractérisé en ce qu'**il comporte des moyens de refroidissement du boitier.

9. Pack selon la revendication 8, **caractérisé en ce que** les moyens de refroidissement comportent des moyens pour assurer une circulation forcée d'un fluide de refroidissement à travers la succession de compartiments formant le boitier.

10. Pack selon la revendication 8 ou la revendication 9, **caractérisé en ce que** lesdits moyens de refroidissement comportent un dissipateur thermique.

11. Pack selon l'une quelconque des revendications précédentes, **caractérisé en ce que** lesdits circuits électroniques comportent des moyens de commutation permettant de shunter un ou plusieurs stockeurs du train.

12. Pack selon l'une quelconque des revendications précédentes, **caractérisé en ce que** lesdits circuits électroniques comportent des moyens d'équilibrage de tension.

13. Pack selon la revendication 12, **caractérisé en ce que** lesdits moyens d'équilibrage de tension comprennent des moyens de limitation de tension.

14. Pack selon l'une quelconque des revendications précédentes, **caractérisé en ce que** lesdits stockeurs comportent des batteries.

15. Pack selon l'une quelconque des revendications précédentes, **caractérisé en ce que** lesdits stockeurs comportent des supercondensateurs.
